# EUROPEAN PATENT SPECIFICATION

(11) **EP 3 157 723 B1**
(45) Date of publication and mention of the grant of the patent: **31.10.2018**
(21) Application number: 15741236.2
(22) Date of filing: 19.06.2015
(51) Int. Cl.: B29C 43/24, B32B 37/00, B32B 37/15

(54) **APPARATUS AND METHOD FOR LAMINATION**
LAMINIERVORRICHTUNG UND -VERFAHREN
APPAREIL ET PROCÉDÉ DE STATIFICATION

(30) Priority: 19.06.2014 GB 201410964
(43) Date of publication of application: 26.04.2017
(73) Proprietor: Elopak AS, 3431 Spikkestad (NO)
(72) Inventor: BOLLEMAN, Nicolaas Jan, 4571 BG Axel , Zeeland (NL); BURROWS, Anthony Gregory, Letchworth Garden City Hertfordshire SG6 2HB (GB)
(74) Representative: Turner, Richard Charles
(86) International application number: PCT/GB2015/000190
(87) International publication number: WO 2015/193632

(56) References cited:
- WO-A2-2008/077026
- GB-A- 819 606
- JP-A- H08 118 458

## Description

This invention relates to laminating apparatus and a laminating method.

Liquid packaging carton laminates are known comprising, by way of example, progressing inwards, i.e. towards the liquid-contacting surface of the carton, an outermost, moisture-barrier layer of, e.g., low density polyethylene (LDPE); a core layer of, e.g., paperboard; an outer tie layer; an oxygen-barrier layer of, e.g., aluminium foil or ethylene vinyl alcohol (EVOH); an inner tie layer; and an innermost moisture-barrier layer of, e.g., LDPE.

In one general method of manufacturing such laminates for use in the production of cartons which have pour spout fitments applied to the exterior thereof after the cartons have been formed, filled and sealed, at least one row of through holes is formed along a paperboard core layer which is advanced along laminating apparatus, and, at a first lamination station of the apparatus, the core layer is extrusion-coated with the outermost layer of LDPE and enters a nip between two rolls at least one of which is biased towards the other and at least one of which is a chill roll. The laminate so formed is flipped over and advanced to a second laminating station at which the oxygen barrier layer is applied to the inner surface of the core layer with the interposition of the outer tie layer and through a nip between a press roll and a chill roll. The press roll has a steel core with an elastomeric sleeve thereon, so that the elastomeric sleeve urges the portions of the barrier layer and the tie layer covering the through holes in the core layer to protrude into the holes and the tie layer to adhere to the portions of the outermost layer of LDPE under the holes. At a subsequent laminating station of the apparatus the inner tie layer and the innermost layer of LDPE are co-extrusion-coated onto the laminate so formed. An example of such a press roll is disclosed in EP1345756B1, where the sleeve consists of a resilient inner layer and a resilient outer layer with the inner layer being thicker and harder than the outer layer. Another example of a press roll is disclosed in WO 2008/077026.

According to one aspect of the present invention, there is provided a laminating station comprising a first roll, a second roll parallel to said first roll, a biasing arrangement for relatively biasing the first and second rolls together, a depositing arrangement which serves to deposit a layer at one side of a substrate prior to said substrate and said layer entering a nip between said first and second rolls, a belt-guiding arrangement extending parallelly to said first roll, leftmost and rightmost endless belts extending over said first roll and said belt guiding arrangement and through said nip, and, characterized in that between said leftmost and rightmost endless belts, at least one intermediate endless belt extends over said first roll and said belt guiding arrangement and through said nip.

The laminating station may be one laminating station, or each of a plurality of laminating stations at which a molten curtain of particularly thermoplastics is deposited to one side of a single web of material or to between two webs of material.

At any lamination station at which one or more intermediate belts is not employed, a press roll of a suitable character, such as having a resilient cover with a particular outermost layer, can be employed.

The number of laminating stations will, of course, generally depend upon the number of extrusion lamination stages required to produce the desired laminate end product.

The intermediate belt(s) can be employed in the or each station to urge a substrate in the form of a core web or a laminate away from the first roll to deter adhesion of the material of the extrusion coating to the first roll and/or to press portions of a layer into holes in the substrate.

According to a second aspect of the present invention, there is provided a laminating method comprising depositing a layer at one side of a substrate prior to said substrate and said layer entering a nip between a first roll and a second roll, and urging said substrate and said layer away from said first roll by means of a leftmost belt and a rightmost belt extending over said first roll and a belt-guiding arrangement and through said nip and characterised in that at least one intermediate belt,extending over said first roll and a belt-guiding arrangement and through said nip.

Owing to the invention, it is possible to reduce the tendency for material of thermoplastics coating to adhere to a roll over which a substrate and the coating are passed and/or to promote protrusion of portions of a layer into holes in a substrate. The use of belts has the advantage that they can readily be replaced by belts of different properties, for example thickness, width and hardness, to suit different depths and widths of the holes and different material properties of the various layers of the laminate.

Advantageously, the press roll comprises a rigid core with a co-axial, tubular, resilient cover.

According to a third aspect of the present invention, there is provided a press roll comprising a rigid core and an elastic cover on said core and co-axial therewith, said elastic cover comprising a non-adhesive outer surface.

In order that the invention may be clearly and completely disclosed, reference will now be made, by way of example, to the accompanying drawings, in which:-
Figure 1 is a fragmentary side elevation of a per se known laminating apparatus;
Figure 2 is a fragmentary, diagrammatic perspective view from above of the per se known laminating apparatus; and
Figure 3 is a view similar to Figure 2 of either of two embodiments of the invention.

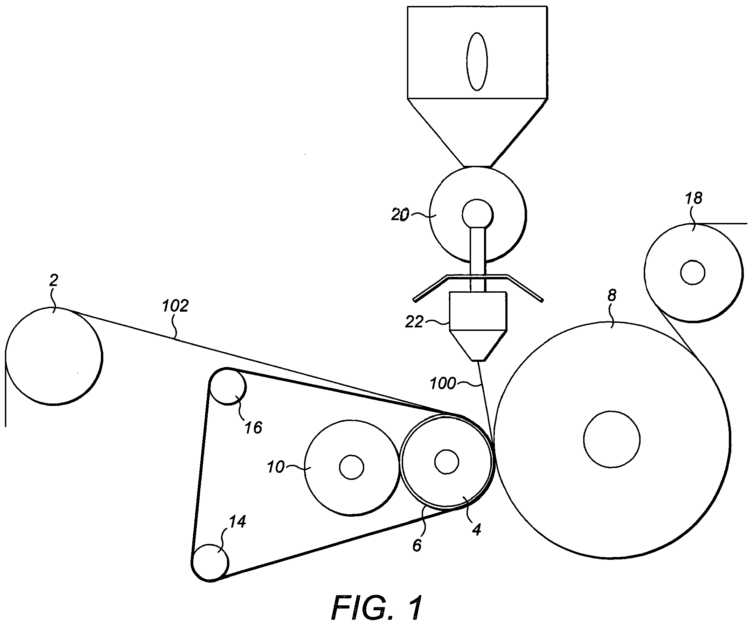

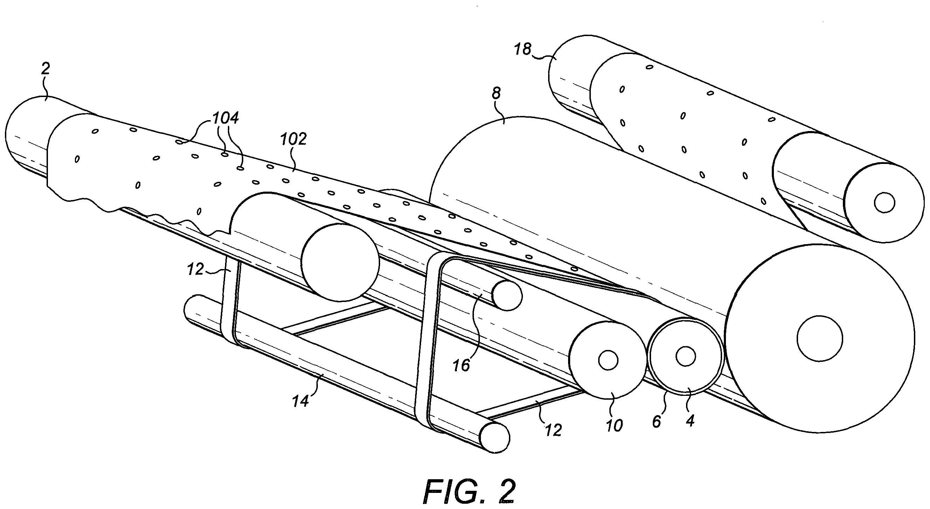

Referring to Figures 1 and 2, the apparatus includes a guide roll 2 and a press roll 4 with an elastomeric covering sleeve 6, a chill roll 8 and a back-up roll 10 which controls the width of and pressure in the nip between the rolls 4 and 8. Rightmost and leftmost belts 12 extend over tensioning and idling rollers 14 and 16 and through that nip. Downstream of the roll 8 is a roll 18. Seen in Figure 1 but omitted from Figure 2 for the sake of clarity is an extruder 20 feeding a die 22 from which flows a curtain 100 of thermoplastics, e.g. LDPE, to coat an advancing substrate 102. The stage shown can be an upstream one where an outermost LDPE layer (100) is applied by extrusion coating to the substrate 102 in the form of a paperboard core layer, or a downstream one where the laminate substrate so formed has been flipped over and carries at its upper surface an aluminium foil layer attached by a tie layer to the paperboard. The leftmost and rightmost belts 12 have the effect of deterring the edges of the layer 100 squeezed in the nip between the rolls 4 and 8 from contacting and adhering to the elastomeric sleeve 6. In a per se known system, the substrate 102 has been formed with rows of through holes 104 distributed therealong to constitute holes openable by manipulation of pour spout fitments following the per se known forming of cartons (from flat carton sleeves, or a reeled web, supplied to a liquid packaging form-fill-seal machine).

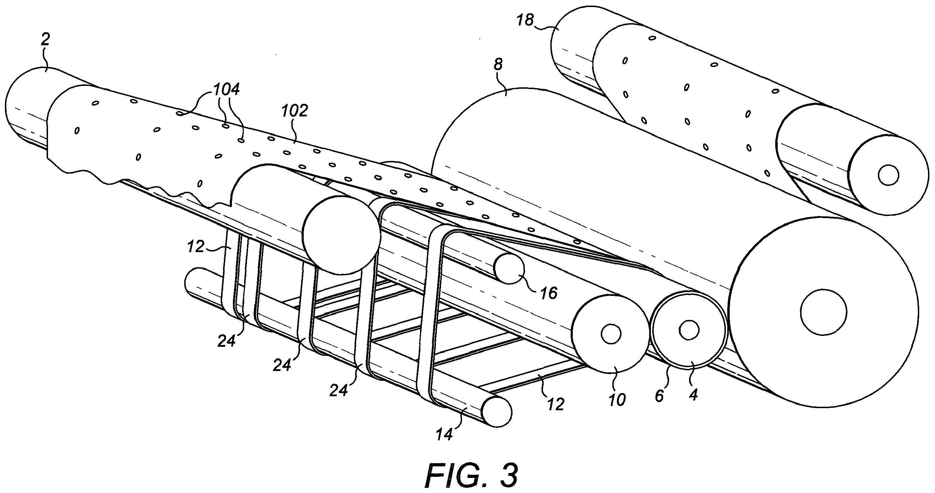

Referring to Figure 3, where again the extruder 20, the die 22 and the curtain 100 have been omitted for the sake of clarity, at least one, in this case three, intermediate belts 24 are arranged between and parallel to the belts 12. The belts 24 are in the planes of the respective rows of holes 104 and deter the thermoplastics of the layer (100) from passing through the holes 104 and thus from contacting and adhering to the elastomeric materials of the sleeve 6. If the station in question is not that upstream one but is the downstream station where an innermost extrusion coating is applied to the outside of an advancing web comprised of outermost thermoplastic layer/paperboard layer/tie layer/aluminium foil, the intermediate belts (24) again extend in the same planes of the respective rows of holes 104, but perform the function of pressing the outermost LDPE layer against the tie layer backed-up by the aluminium foil and the innermost LDPE layer and thus promoting adhesion between the tie layer and the outermost LDPE layer. In a particular example of production of a packaging laminate end product in which, progressing inwards, there are an outermost moisture-barrier layer of LPDE; paperboard; an outer tie layer; an aluminum foil oxygen barrier layer; an inner tie layer; and a innermost moisture-barrier layer of LDPE, there are three lamination stations. At the first the outermost LDPE layer is extrusion coated to the paperboard. At the second that web, flipped over, is merged with a web consisting of the outer tie layer and the aluminum foil. At a third the latter web, with the aluminum foil uppermost, a co-extrusion coating consisting of the inner tie layer and the outermost layer of LDPE is applied to the foil.

The first station is according to Figures 1 and 2, i.e. intermediate belts, are not employed, but instead a press roll 4 having a covering sleeve 6 comprised of rubber and an outermost layer 6. The layer 6 is non-adhesive, for example of "TEFLON" ®, namely polytetrafluoroethylene (PTFE). The second station is also according to Figures 1 and 2, with a press roll 4 having a covering sleeve 6 comprised of rubber and an outermost layer of "TEFLON" ®. The third station is according to Figure 3. Thus adhesion between the outer tie layer and the outermost layer is promoted.

## Claims

1. A laminating station comprising a first roll (4), a second roll (8) parallel to said first roll (4), a biasing arrangement for relatively biasing the first and second rolls (4, 8) together, a depositing arrangement (22) which serves to deposit a layer (100) at one side of a substrate (102) prior to said substrate (102) and said layer (100) entering a nip between said first and second rolls (4, 8), a belt-guiding arrangement (14, 16) extending parallelly to said first roll (4), leftmost and rightmost endless belts (12) extending over said first roll (4) and said belt guiding arrangement (14, 16) and through said nip, and, **characterised in that** between said leftmost and rightmost endless belts (12), at least one intermediate endless belt (24) extends over said first roll (4) and said belt guiding arrangement (14, 16) and through said nip.

2. A laminating station according to Claim 1, wherein said substrate (102) includes at least one row of holes (104) distributed therealong and for covering by said layer (100) at one side of said substrate (102) and by a gas barrier layer at the opposite side of the substrate (102), said at least one intermediate endless belt (24) being allocated to said at least one row of holes (104).

3. A station according to Claim 1 or 2, wherein said first roll (4) comprises a rigid core and a resilient covering sleeve (6) on said core and co-axial therewith.

4. A station according to Claim 1 or 2, wherein said substrate (102) comprises a layer of paperboard.

5. A station according to Claim 1 or 2, wherein said substrate (102) comprises, progressing inwardly therethrough, a moisture barrier layer, a core layer, a tie layer and an oxygen barrier layer.

6. A laminating method comprising depositing a layer (100) at one side of a substrate (102) prior to said substrate (102) and said layer (100) entering a nip between a first roll (4) and a second roll (8), and urging said substrate (102) and said layer (100) away from said first roll (4) by means of a leftmost belt (12) and a rightmost belt (12) extending over said first roll (4) and a belt-guiding arrangement (14, 16) and through said nip and **characterised in that** at least one intermediate endless belt (24), (24), extending over said first roll and a belt-guiding arrangement (14, 16) and through said nip.

## Patentansprüche

1. Kaschierstation, die eine erste Walze (4), eine zweite Walze (8) parallel zur ersten Walze (4), eine Vorspannanordnung, um die erste und zweite Walze (4, 8) relativ zueinander vorzuspannen, eine Aufbringungsanordnung (22), die dazu dient, eine Schicht (100) an einer Seite eines Substrats (102) aufzubringen, bevor das Substrat (102) und die Schicht (100) in einen Walzenspalt zwischen der ersten und zweiten Walze (4, 8) eintreten, eine Bandführungsanordnung (14, 16), die sich parallel zu der ersten Walze (4) erstreckt, ganz links und ganz rechts angeordnete Endlosbänder (12), die sich über die erste Walze (4) und die Bandführungsanordnung (14, 16) und durch den Walzenspalt erstrecken, umfasst, und, **dadurch gekennzeichnet ist, dass** sich zwischen den ganz links und ganz rechts angeordneten Endlosbändern (12) mindestens ein dazwischenliegendes Endlosband (24) über die erste Walze (4) und die Bandführungsanordnung (14, 16) und durch den Walzenspalt erstreckt.

2. Kaschierstation nach Anspruch 1, wobei das Substrat (102) mindestens eine Reihe von Löchern (104) umfasst, die daran entlang verteilt sind und durch die Schicht (100) an einer Seite des Substrats (102) und durch eine Gasbarriereschicht an der gegenüberliegenden Seite des Substrats (102) bedeckt werden, wobei das mindestens eine dazwischenliegende Endlosband (24) der mindestens einen Reihe von Löchern (104) zugewiesen ist.

3. Station nach Anspruch 1 oder 2, wobei die erste Walze (4) einen starren Kern und eine elastische Abdeckhülse (6) auf dem Kern und koaxial mit diesem umfasst.

4. Station nach Anspruch 1 oder 2, wobei das Substrat (102) eine Schicht aus Karton umfasst.

5. Station nach Anspruch 1 oder 2, wobei das Substrat (102), wenn man innerlich durch dieses voranschreitet, eine Feuchtigkeitssperrschicht, eine Kernschicht, eine Verbindungsschicht und eine Sauerstoffsperrschicht umfasst.

6. Kaschierverfahren, das das Aufbringen einer Schicht (100) an einer Seite eines Substrats (102), bevor das Substrat (102) und die Schicht (100) in einen Walzenspalt zwischen einer ersten Walze (4) und einer zweiten Walze (8) eintreten, und das Wegdrängen des Substrats (102) und der Schicht (100) von der ersten Walze (4) mittels eines ganz links angeordneten Bands (12) und eines ganz rechts angeordneten Bands (12), die sich über die erste Walze (4) und eine Bandführungsanordnung (14, 16) und durch den Walzenspalt erstrecken, umfasst, und **dadurch gekennzeichnet ist, dass** sich mindestens ein dazwischenliegendes Endlosband (24) über die erste Walze und eine Bandführungsanordnung (14, 16) und durch den Walzenspalt erstreckt.

## Revendications

1. Station de stratification comprenant un premier cylindre (4), un deuxième cylindre (8) parallèle audit premier cylindre (4), un agencement de précontrainte pour la précontrainte relative des premier et deuxième cylindres (4, 8) ensemble, un agencement de dépôt (22) qui sert à déposer une couche (100) sur un côté d'un substrat (102) avant que ledit substrat (102) et ladite couche (100) entrent dans un écartement entre lesdits premier et deuxième cylindres (4, 8), un agencement de guidage de courroie (14, 16) s'étendant parallèlement audit premier cylindre (4), des courroies sans fin la plus à gauche et la plus à droite (12) s'étendant sur ledit premier cylindre (4) et ledit agencement de guidage de courroie (14, 16) et à travers ledit écartement, et **caractérisée en ce qu'**entre lesdites courroies sans fin la plus à gauche et la plus à droite (12), au moins une courroie sans fin intermédiaire (24) s'étend sur ledit premier cylindre (4) et ledit agencement de guidage de courroie (14, 16) et à travers ledit écartement.

2. Station de stratification selon la revendication 1, dans laquelle ledit substrat (102) comprend au moins une rangée de trous (104) répartis le long de celle-ci et pour le recouvrement par ladite couche (100) sur un côté dudit substrat (102) et par une couche formant barrière au gaz sur le côté opposé du substrat (102), ladite au moins une courroie sans fin intermédiaire (24) étant attribuée à ladite au moins une rangée de trous (104).

3. Station selon la revendication 1 ou 2, dans laquelle ledit premier cylindre (4) comprend une partie centrale rigide et une gaine de couverture élastique (6) sur ladite partie centrale et coaxiale à celle-ci.

4. Station selon la revendication 1 ou 2, dans laquelle ledit substrat (102) comprend une couche de carton.

5. Station selon la revendication 1 ou 2, dans laquelle ledit substrat (102) comprend, en progression vers l'intérieur à travers celui-ci, une couche formant barrière à l'humidité, une couche centrale, une couche de liaison, et une couche formant barrière à l'oxygène.

6. Procédé de stratification comprenant le dépôt d'une couche (100) sur un côté du substrat (102) avant que ledit substrat (102) et ladite couche (100) entrent dans un écartement entre un premier cylindre (4) et un deuxième cylindre (8), et l'éloignement dudit substrat (102) et de ladite couche (100) dudit premier cylindre (4) au moyen d'une courroie la plus à gauche (12) et d'une courroie la plus à droite (12) s'étendant sur ledit premier cylindre (4) et un agencement de guidage de courroie (14, 16) et à travers ledit écartement, et **caractérisé en ce qu'**au moins une courroie sans fin intermédiaire (24) s'étend sur ledit premier cylindre et un agencement de guidage de courroie (14, 16) et à travers ledit écartement.
